# EUROPEAN PATENT APPLICATION

(11) **EP 1 675 080 A1**
(43) Date of publication of application: **28.06.2006**
(21) Application number: 05028065.0
(22) Date of filing: 21.12.2005
(51) Int. Cl.: G07F 19/00, G06Q 10/00

(54) **Method and system for handling rebate-entitled credit card payment transactions**

(30) Priority: 21.12.2004 EP 04030329
(71) Applicant: Ruehmkorf eSolution GmbH i.L., 63110 Rodgau (Dudenhofen) (DE)
(72) Inventor: Rühmkorf, Horst, 63110 Rodgau (Dudenhofen) (DE)
(74) Representative: Patentanwälte Lambsdorff & Lange

(57) **Abstract**

In this method a credit card entitled for rebates initiates a payment transaction with a merchant granting rebates, resulting in a rebate amount being calculated from the purchase sum of the payment transaction and a set rebate rate and the rebate amount being forwarded to a storage area assigned to the rebate entitled card holder and added to the value contained in the storage area. In this way, consumers can purchase by credit card and automatically receive to their credit a rebate from instituted merchants. From the storage area, representing a (virtual) banking account accumulating rebate amounts can then be regularly remitted to an insurance company or a finance investment institute for building up a retirement pension. Contained in a consumer pension organisational entity are, more particularly, a communications server (5) for receiving the transaction information from the card issuer and a data base server (2) for storing and managing the consumer and merchant related information and for calculating the rebate amount.

## Description

The present invention relates to a method and system for handling rebate entitled payment transactions instituted by credit cards or the like.

The credit card business has since gained major significance worldwide. On the German credit card market alone, Mastercard for example has currently around 12 million credit cards and approximately 90 million debit cards in circulation, the number for Visacard being roughly the same. Throughout Europe Mastercard has roughly 100 million credit cards in circulation, the figure worldwide exceeding 500 million. The growth rates - depending on the country or region concerned - already amount to 5% per year, and are still growing.

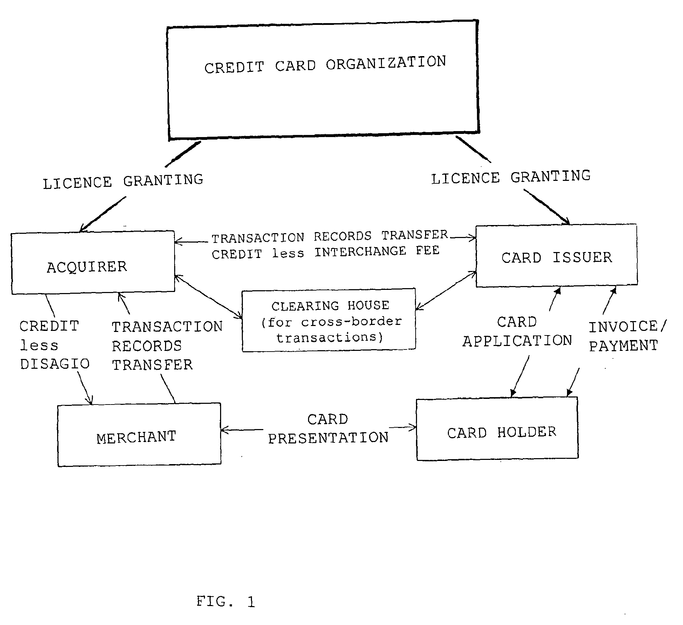

Referring now to FIG. 1 there is illustrated diagrammatically the basic structure of a conventional credit card system. The requirement for a merchant honouring credit card payments is that the merchant is a credit card participating company, in other words the merchant must have concluded a participation agreement with an acquirer. The acquirer may be a credit card institute or active in some other business and can acquire participating companies when having a corresponding licence of the credit card company (e.g. VISA, Mastercard, American Express, Diners Club). In the participation agreement the acquirer takes on the obligation to settle the debt of the card holder. This assurance of payment by the acquirer is of central significance for honouring the credit card. The participating company in turn takes on the obligation - apart from certain obligations in taking all due care and checking - to waiver cash payment on requirement of the card holder when presenting his credit card and instead to honour the credit card in lieu. The participating company must pay over a commission (disagio) as a return service for the performances made by the acquirer.

The acquirer passes on the records of the transactions communicated to him by the participating company to the card issuer cross-borders with the intervention of a clearing authority and debits the charges to the card issuer with deduction of the domestic interchange fee for services of the issuer and accepting the creditworthiness risk.

The card holder usually pays a fixed annual fee to the card issuer. In addition, the card issuer charges a commission for cross-border payments as well as, where necessary, a cash payment fee. For handling the credit card transaction the participating company pays the disagio to the acquirer, the amount of which is stipulated in the participation agreement and depending on the quality of the transaction, purchase total and the like. When the contract partner of the merchant is simultaneously the issuer of the card with which payment was made, he receives the full disagio. In cases where card issuer and acquirer are separate companies within the credit card system, it is the acquirer who first receives the disagio, of which he retains a part for his services, he passing on a fixed percentage, namely the aforementioned domestic interchange fee, to the card issuer. The amount of the disagio is bargained by the acquirer with the participating company as influenced by various criteria such as card purchase totals, settling frequency or binding term.

Between the participating companies the relevant data and information is exchanged over public telecommunication networks, starting with the merchant who communicates the transaction information via a card reader in the form of a point of sale (POS) terminal to the acquirer, unless for this purpose an imprinter is used to produce the receipts. The other firms involved too, normally make use of public telecommunication networks for communicating the corresponding information. For this purpose it is principally possible to use the Internet. This is the reason why integrated software solutions have already been developed by firms specialized in the field to which the firms participating in the credit card system have access via Internet. This includes the consumers - as long since known - who can purchase via Internet by credit card simply by entering the credit card number.

The gist of the present invention is as follows: the demands on retirement pension systems throughout Europe are increasing all the time. The reason for this, among other things, is the pension system itself in its current form, the demographic development and developments in the economy. Having to continually reduce retirement pensions - which otherwise could no longer be financed - and the further increase in the number of people attaining retirement age is resulting in a serious medium to long-term reduction in willingness of consumers to spend. At the worst the requirement in roughly 20 to 30 years can be down to just covering the basic requirement. Since politics fail to produce any basic change in retirement pension systems and an immediate increase in the birthrate - impossible in any case - would not come into effect until 20 to 30 years later, private coverage covered by capital has become a mandatory requirement. However, broad sections of the population are not willing or simply are unable to make continual further payments for a private retirement pension scheme in addition to their normal pension contributions as required by law. At the same time, large circles of the population are afraid of how the economy is developing and tend to spend less with the known consequences on current economic development in retailing.

It is thus the object of the present invention to apply a method with which the willingness to consume can be enhanced whilst, more particularly, structuring for consumers a more or less no-cost retirement pension coverage by capital in generating consumer loyalty for the merchant involved, assuring him a livelihood over a lengthy period of time.

This object is achieved by the features of the independent claims. Advantageous embodiments and aspects read from the subject matter of the sub-claims.

The present invention is firstly based on the gist of having discovered that although there is in principle the possibility of bargaining for a reduction in price or rebate on every purchase, ever since the Rebate Act went out of law some years ago, use of this possibility is seldom. The reason or this is, for one thing, that many merchants, particularly retailers or stores generally exclude granting rebate for various reasons. For another, the cause is also that only very few consumers are willing and have the tendency to bargain for a rebate every time they make a purchase.

Thus one incentive essential to the present invention is to link cashless payments by credit cards with the automatic granting of set rebates, preferably by the merchants. The rebate amount saved on each purchase can then be put to use in forming capital, particularly for building up a retirement pension or life insurance for the consumer.

The present invention thus relates to a method for handling rebate entitled payment transactions by means of credit cards or the like, involving a) calculating a rebate amount on the basis of a payment transaction made by a credit card entitled for rebate with a merchant from the purchase sum of the payment transaction and a set rebate rate, and b) forwarding the rebate amount to an account assigned to the rebate entitled card holder and added to the value already having accumulated in the account.

The rebate is preferably granted by the merchant concerned in keeping with the general notion as to rebate. However, it could also be provided for that the rebate is not granted by the merchant concerned but by one of the banks or organisational entities involved as described in the following.

The steps a) and b) of the method can be performed by an organisational entity as may be a business company in its own right and termed "consumer pension" or "consumer pension entity" in the following. This company may, however, also be linked to the credit card organisation by a licensing agreement or it may be a component in the organisation thereof. But in any case the consumer pension organisational entity is communicated the transaction data of the payment transaction so that it can calculate the rebate amount from the purchase sum, merchant and the rebate rate granted therefor. As an alternative steps a) and b) in the method may also be performed by the acquirer and/or the card issuer since these already have the transaction data in any case. In this case, the organisational entity "consumer pension" would be incorporated in the acquirer and/or card issuer.

The method may also be performed so that all rebate amounts resulting from payment transactions of all rebate entitled card holders are transferred by the merchant granting the rebate to a pool or accumulation account. Thus pool account may be handled by a pool account bank, the rebate amounts then being transferred from this pool account to individual rebate accounts of the various card holders which, for example, are virtual banking accounts handled in a clearing and processing center.

These virtual banking accounts may be technically configured as storage areas in a data processing system, these storage areas thus representing the internal virtual banking accounts on which the rebate amounts of the individually card holders are accumulated. For each card holder and consumer in the consumer pension system a rebate account and a corresponding storage area is installed. Since this merely involves an internal banking account it is irrelevant in which calculator the rebate amount is stored. The rebate amount can be stored in the calculated EURO sum or it could also be stored as a corresponding number of points.

In one preferred embodiment, from this rebate account, preferably in regular time intervals, set amounts are transferred to a pension account assigned to the card holder as handled by an insurance or finance investment institute, particularly for the purpose of forming capital in the scope of a retirement pension or life insurance. In technical terms the storage area is thus reduced at regular intervals in time by the set amounts.

For performing this method, credit cards are issued by a credit card company or by the licensed card issuer. These credit cards contain a rebate entitlement for the corresponding card holders or already existing conventional credit cards are provided with such a rebate entitlement. Merchants on contract to honour credit cards with such a rebate entitlement thus become participatants granting rebate. From then on these have the obligation to pay both the disagio as well as the rebate amount on every payment transaction. The merchants involved in this see the promise of added sales and a substantial consumer loyalty over the coming years or decades. In turn the consumer is aware as to which merchants will honour his credit card with rebate entitlement and is willing to change the merchant since he is, of course, eager to automatically obtain rebate on every purchase without having to bargain for it. The consumer is likewise aware that he is additionally financing his own retirement pension with every such purchase when the savings from the rebate amounts are employed in forming capital for a retirement pension or life insurance. This will also prompt him to be less reserved in purchasing, the merchants in turn will, by making use of the invention, create their future consumers and safeguard their livelihood.

Instead of issuing original credit cards with rebate entitlement it is also possible to convert already existing, conventional credit cards yet to receive rebate entitlement into credit cards with rebate entitlement, i.e. by applying for and registering these credit cards a rebate entitlement with the consumer pension entity. From then on, with these credit cards purchases can be made with granting of a rebate without it being necessary to issue a new credit card.

First storage means are preferably provided in which data as regards card holders with rebate entitlement are stored and in which each card holder with rebate entitlement is assigned a storage area in which the rebate amounts assigned to this consumer are accumulated. The first storage means preferably take the form of a data base. It is further preferably provided for that the merchants granting rebate are required to grant certain set rebate rates which, for example, could also be regularly reported to the card holder, since these rebate rates may vary , depending on the various merchants and various articles on offer. Granting the rebate is preferably defined by a contract agreement between the consumer pension entity and the merchant, whereas the amount of the rebate must not necessarily be an item of the contract, it instead possibly being variable by the merchant whilst the contract is effective, as long as this is suitably informed to the consumer pension entity and the consumer. Preferably, data as regards the merchants granting rebate and the rebate rates as applicable is stored in second storage means which likewise may take the form of a data base. In step a) of the method, access may be made to this second storage means when calculating the rebate amount to establish the rebate rate to be employed.

The rebate rate is a percentage to be multiplied by the purchase sum. This rebate rate may be determined by the merchant himself or negotiated individually between consumer pension entity and each merchant concerned. Where necessary or where desired the rebate rate may differ, depending on the goods concerned and/or varied depending on the time period involved.

The complete transaction in handling payments may be scheduled as follows: Applications for a credit card with rebate entitlement are filed with the consumer pension organisational entity, the consumer information is registered in the system, i.e. in the first storage means and forwarded automatically to a card issuer electronically. In a payment transaction with a merchant granting rebate the transaction information is firstly communicated to the acquirer who then reimburses the merchant the purchase sum less the disagio. The transaction information is then forwarding from the acquirer to the card issuer who then automatically passes it on electronically to the consumer pension organisational entity. The consumer pension organisational entity then invoices the merchant with the rebate amount as calculated, preferably in the form of invoice compilations composed of the rebate amounts of a certain number of the payment transactions. Invoice amounts of the merchants banked into a real banking account from the consumer pension entity are then directed internally as already described to the virtual banking accounts, i.e. the storage areas of the consumers or added to the amounts contained therein. From the consumer pension entity consumer related amounts can then be remitted to the insurance company and at the same time the banking accounts reduced by the corresponding amounts.

As already indicated further above, it is just as possible to proceed so that the steps a) and b) are performed in the acquirer and/or the card issuer, the consumer pension organisational entity consequently forming a segment of these organisations. In this case, the method can be scheduled, for example, such that the acquirer computes the rebate amount and reimburses the merchant the purchase sum less the disagio and the rebate amount. Whilst retaining the disagio the acquirer allocates the rebate amount to the virtual banking account of the consumer and remits the corresponding value to the storage means. Thus, the acquirer himself has the first and second storage means or the corresponding data bases. It can just as well be provided for that the consumer pension organisational entity is a component of the card issuer who consequently performs steps a) and b). In this case, for example, the acquirer would reimburse the merchant the purchase sum less the disagio and the rebate amount as calculated by him, retain the disagio, but remit the rebate amount to the card issuer who then handles it as already described. These two alternative solution possibilities merge into a single alternative solution possibility when the acquirer and the card issuer are formed by one and the same company.

The method in accordance with the invention can be performed in the case of a conventional credit card payment as well as in the case of a credit card payment via the Internet or also when payment is made by cellphone. In conventional credit card payment the payment transaction is initiated by inserting the credit card into a credit card reader provided by the merchant. The credit card reader is normally linked to a Personal Computer at the merchant's location. The credit card reader and the Personal Computer are designated as point of sale (POS) terminal. With this point of sale (POS) terminal a communication link can also be made to the acquirer, serving to perform an ID check via the acquirer to the card issuer as regards the credit card and the data of the card holder, to conclude the payment transaction on receiving the okay and to communicate the data to the acquirer. The payment transaction via Internet is made by the card holder entering the credit card number at his PC in a field specially provided therefor in an entry mask on an Internet page of the merchant.

Exchanging information between the organisational entities involved can be made for example on the basis of the ISO-8583 interface.

The present invention relates likewise to a system for handing rebate entitled payment transactions by means of credit cards or the like, comprising a credit card which has rebate entitlement, a rebate account assigned to the credit card holder, means for calculating a rebate amount from a purchase sum of payment transaction activated by the credit card holder and a set rebate rate, and means for communicating the rebate amount to the rebate account and adding the rebate amount to the amount already stored in the rebate account.

Preferably the rebate is granted by the merchant so that the system comprises one or more rebate-granting merchants instituted so that they grant a rebate at a set rebate rate for a payment transaction with a rebate entitled credit card.

The system comprises preferably a pool account bank in which a pool account or accumulation account is installed, the pool account bank being instituted to honour rebate transactions and to accumulate the remitted rebate amounts in the pool account.

The system comprises further preferably a number of storage areas representing the rebate accounts assigned to the corresponding rebate entitled card holders and instituted to store or accumulate the rebate amounts.

First storage means, particularly a data base, may also be integrated in the system in which data as regards the rebate entitled consumers is stored and in which the storage areas are contained.

Moreover, the device preferably comprises second storage means, particularly a data base, in which data is stored as regards the rebate-granting merchants and the rebate rates as applicable to the merchants.

It may be provided for that the first and second storage means are structured as segments of a single data base, although it may just as well be provided for that the aforementioned storage means configured as data bases are made available by a data base server via Internet to which the consumer pension entity or the entity within which the method is performed has access via an Internet link to data bases as made available.

The calculating means may be included in a data processor existing within the consumer pension organisational entity. For example, the calculating means and the first and second storage means may be contained in a data bases in which the substantial steps in the method are performed. This data base server may be linked to a communications server via which the relative data as regards the payment transactions can be received via the POS/ATM network or also via Internet from the card issuer or acquirer.

Credit card in this context is to be understood in its broadest sense, I.e. not only meaning credit cards in the usual sense but, for example, also debit cards, proprietary cards as well as EC cards of the banks, special consumer cards issued by department stores and retail outlets, all of which permit cashless payments. The invention also relates to subsequent activation of conventional credit cards already in circulation by entering and storing a rebate entitlement therein.

The salient advantages afforded by the present invention will now be briefly summarized:
1. The method in accordance with the invention is applicable for use with debit cards, credit cards and proprietary cards alike, it being particularly for debit cards that the method in accordance with the invention is particularly suitable and promising in application.
2. All cards already in circulation can be included, there being no need to rollout new cards.
3. The method in accordance with the invention is instantly compatible with existing infrastructures for authorizing, clearing, processing and settling transactions.
4. The method and the device are not restricted to one rebate per purchase sum, instead any number of different rebates can be handled depending on the articles or groups thereof concerned. In addition, or as an alternative thereto, rebate rates can also be structured as a function of time, in other words time windows for certain rebates can be defined variable for certain articles or groups thereof concerned.
5. The remitted rebate amounts are bundled into placement-compatible call money contacts and managed congruent in term.
6. In accordance with the deadlines for premium payments the call money contacts are resolved, the interest percentage having incurred credited to the card holders and the premium amounts credited to the insurance company.
7. KAD files can be made available to the issuing bank for statements.
8. The card holder is able to inform himself as to the balance of his account in Internet at any time.
9. The card holder can name a third-party as beneficiary for his rebates.

The invention will now be detailed by way of an example with reference to the drawings in which:
- FIG. 1: is a flow chart of how a conventional credit card system is structured;
- FIG. 2: is a flow chart of a first embodiment of a credit card system structured for implementing the method in accordance with the invention;
- FIG. 3: is an illustration of an example of how the consumer pension entity is structured technically;
- FIG. 4: is a flow chart of a second embodiment of a credit card system structured for implementing the method in accordance with the invention.

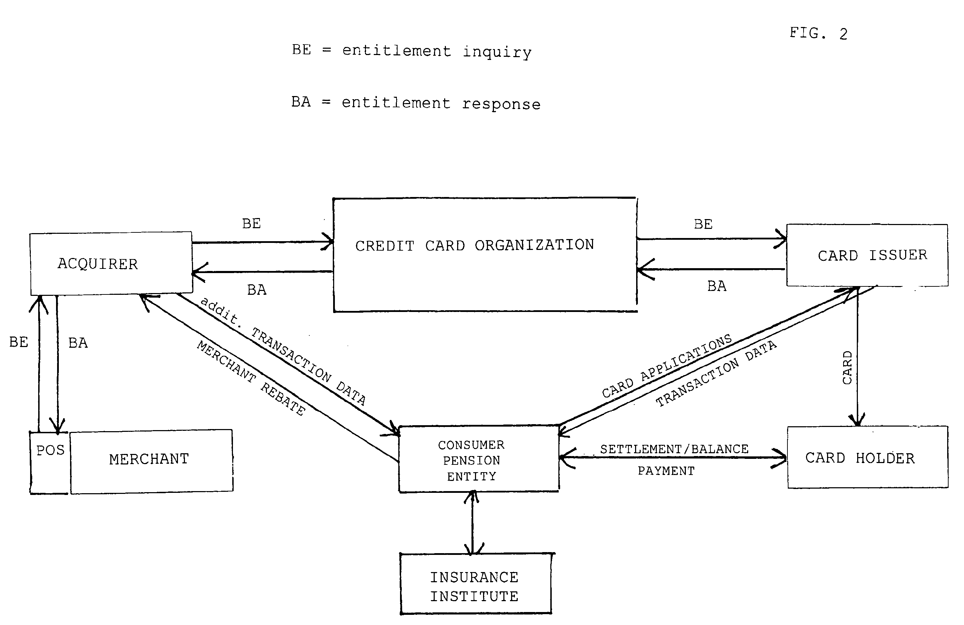

Referring now to FIG. 2 there is illustrated the structure of a credit card system for implementing the method in accordance with the invention showing diagrammatically the data flow involved. It is to be noted that as compared to FIG. 1 a few blocks and arrows have been omitted to make for a better overview since these are taken as assumed.

One significant new element of this credit card system as compared to that of FIG. 1 has already been mentioned, it being identified as consumer pension entity, representing an organisational entity in which card holders involved in the rebate entitled credit card system and their rebate banking accounts as well as the rebate granting merchant and their rebate rates are managed. This organisational entity may be for example an independent company which in this function, just like the acquirer or the card issuer, can be linked to the credit card organisation by licence agreements, although it is just as possible for it to be a organisational entity linked to one of the other acquirer, card issuer or credit card organisation entities.

Applications for new rebate entitled credit cards are firstly filed with the consumer pension entity and then relayed to the card issuer who issues the credit card to the new card holder. When the card holder makes a purchase at a merchant, the credit card is inserted in the point of sale (POS) terminal there to initiate an entitlement inquiry (BE) as is passed on via the acquirer and credit organisation to the card issuer. The card issuer, as a rule, is the bank where the card holder has his account. The entitlement inquiry is answered by the card issuer and returned as the entitlement response (BA) via the credit organisation and the acquirer to the point of sale (POS) terminal of the merchant. This information exchange can be made for example in accordance with the ISO-8583 protocol via the public telephone networks.

When the entitlement response is positive the transaction is performed and the transaction information is furnished by the card issuer to the consumer pension entity, this too also being possible via ISO-8583 interface. On the basis of the transaction data, namely the purchase sum and the merchant involved in the payment transaction the consumer pension entity establishes the rebate rate and calculates the rebate amount which it then charges to the merchant, preferably in the form of periodic invoice compilations. At the same time or on having received the amounts invoiced the consumer pension entity credits the rebate amount(s) of an invoice compilation to internal banking accounts of the card holders. These banking accounts correspond to storage areas on a data base installed within the consumer pension entity for storing the consumer related data.

At regular intervals the consumer pension entity remits amounts to accounts kept consumer related by an insurance institute and serving to build up a retirement pension or life insurance. At the same time, the corresponding banking account of the consumer is reduced by the amount corresponding to the amount remitted.

Within the consumer pension entity there is thus not only a data base for storing consumer-related data and consumer-related banking accounts but also a data base for storing merchants and the rebate rates as defined by contract agreement. These two data bases may also be combined in a sole data base.

It may also be provided for that a data exchange is possible between the consumer pension entity and the acquirer, for instance, by the acquirer furnishing additional transaction data such as the "purchasing card addendum" to the consumer pension entity and it may again also be provided for that the consumer pension entity likewise communicates the merchant rebates to the acquirer. In this case, since the merchant rebates are already stored with the acquirer, it could be the acquirer calculates the rebate amount and communicates it to the consumer pension entity so that the consumer pension entity then merely needs to make the internal banking of the rebate amounts.

Card holder and consumer pension entity communicate by normal mail or electronic mail by the card holder being regular communicated a detailed listing of his payment transactions along with the balance of his internal rebate banking account, prompting him to make payment. However, it may also be provided for that the card holder - as shown in FIG. 1 - is invoiced by the card issuer to whom he makes the payment directly so that he simply receives from the consumer pension entity a regular update as to the balance of his rebate banking account.

When the purchase is made via Internet the card holder enters his credit card number in an input mask on an Internet page of the merchant on his PC, by means of which the merchant - likewise preferably via Internet - initiates the entitlement inquiry.

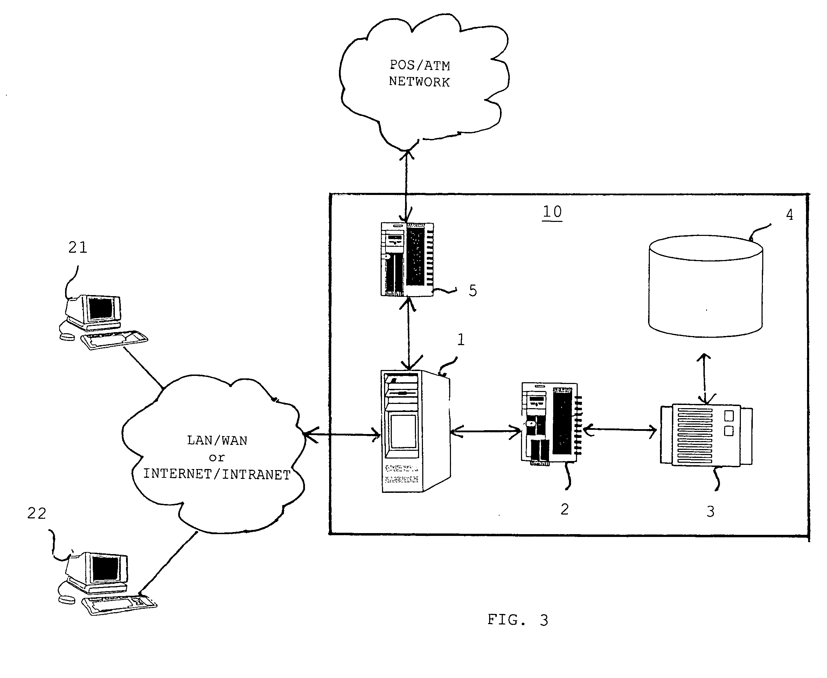

Referring now to FIG. 3 there is illustrated an example of how the consumer pension organisational entity is structured technically. The organisational entity comprises a terminal server 1 for furnishing communication to LAN/WAN data networks or Internet/intranet in thus making available an interactive system operation by consumer pension organisational entity personnel who can communicate data to the terminal server 1 at workplaces 21 and 22 via these data networks.

The terminal server 1 is linked to a data base server 2 which, for example, may be operated by the UNIX operating system. The data base server 2 comprises one or more data bases in which the data specific to the consumers and specific to the merchant is stored. The data specific to the consumers contains in particular the storage areas, in other words the internal banking accounts in which the accumulated rebate amounts are stored as related to the consumer concerned as well as other consumer-related data such as addresses, registration numbers and the like. The data specific to the merchant may include the rebate rates which may differ from one merchant to the other and which may vary for the various goods concerned. In addition, the data specific to the merchant may likewise include addresses, registration numbers of the merchants and the like. The merchant-related data may also contain data necessary for getting access to the merchant's POS PC/server or to a specific memory area thereof. In the data base server 2 the means for calculating the rebate amount from the purchase sum and the rebate rate may also be included.

Moreover, external storage units such as a disk store 3 and a mirror store 4 may also be linked to the data base server 2.

Also linked to the terminal server 1 is a communications server 5 for communicating with the POS/ATM network to which the merchants are linked via their POS terminals. Data exchange with the acquirer and the card issuer is then made via communications server 5 in accordance with the ISO-8583 protocol. The POS/ATM network may also serve for linking the merchants to the acquirer. The transaction data may be communicated electronically from the card issuer to the consumer pension organisational entity via communications server 5 and relayed to the data base server 2 where the rebate amount is calculated.

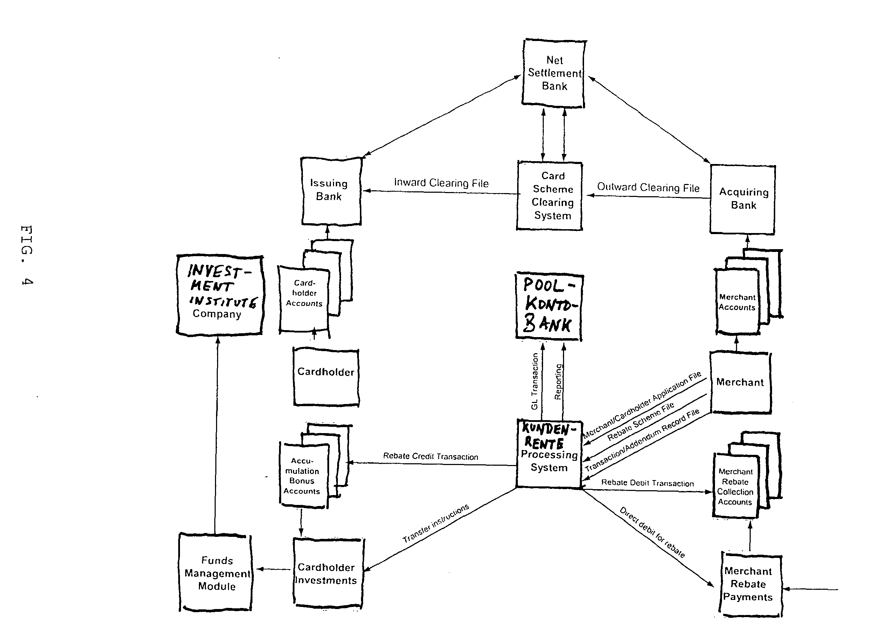

According to FIG.2 the transaction data are communicated from the merchant to consumer pension at least via the acquirer, in particular via the acquirer, the credit card organisation and the card issuer. In a slightly modified embodiment which is explained in connection with FIG.4 the transaction data may be communicated directly from the merchant to the consumer pension entity. In this case the merchants may send the transaction data via the POS/ATM network to consumer pension. There are several possible solutions of performing the data transfer in this embodiment. In one solution the transmission of the transaction data is initiated by the merchant's POS, i.e. the merchant's PC or server which is part of the merchant's POS and which is linked to the POS/ATM network or any other public switched or leased network which might be used in this respect. The transaction data may be sent via the POS/ATM network to the communications server 5 of consumer pension. Thsi may be done by manual input at the merchant's POS PC/server. A better solution, however, would be a special computer program or software which is adapted for automatically initiating the transmission of the transaction data to consumer pension, wherein the software may be provided by consumer pension and installed on the merchant's POS PC/server. Anyway the transaction data may be sent instantaneously at the time of the payment transaction or they may also be bundled in a memory area on the merchant's POS PC/server and then sent altogether in periodic time intervals, e.g. in weekly or monthly intervals. In another solution of transmitting the transaction data the merchant's POS PC/server does not have to initiate the data transmission. Instead the transaction data are only stored and bundled in a memory area on the merchant's POS PC/server. In certain time intervals, e.g. weekly or monthly time intervals, the communications server 5 at consumer pension builds up a connection to the merchant's POS PC/server for obtaining the recent transaction data therefrom. In this case no special software would have to be installed on the merchant's PC. Instead a special software would have to be installed on the communications server 5 of consumer pension. This software may be adapted such that by executing the software on the communication server 5 it facilitates direct access to the memory area on the merchant's PC in which the transaction data are stored. In this solution there would be minimum burden at the merchant's side. He would only have to arrange for a special memory area on his POS PC/server for storing the rebate-related transactions. Of course, all the data transmission would occur by special coding or cyphering programs. The software should morerover be arranged such that it can only facilitate access to the special memory area but not to other files on the merchant's PC/server. The software as installed on the communications server 5 could be arranged such that it is automatically executed on specific times of pre-determined periods, e.g. a specific day of the month, and upon started it first obtains all necessary merchant-related data from the database server 2, orders them in a list and then builds up access to the merchant's POS servers one after the other according to the list for obtaining the rebate-related transaction data therefrom. After having obtained the data the software effects that the memory areas on the merchants servers are set to zero. In such a way of obtaining the transaction data there is no burden on the merchants to send the data themselves or to act in another way in order to transmit the transaction data to consumer pension and to install a respective software in this respect. When the first rebate-related transaction is done during a running period the merchant's server may send a short data transmission to the communications server 5 so that the communications server 5 may set a flag for the respective merchant. When the merchant-related flags are set they indicate that at least one payment transaction is stored in the memory area of the respective merchant's server. When the software is executed on the communications server 5 only those merchant's servers of the list are accessed where the flags are set. When a flag is not set then no payment transaction is present on the merchant's server so that the communications server 5 does not have to build up connection to this specific merchant.

All the above-mentioned features of transmitting the transaction data may also be applied to the embodiment of Fig.2, i.e. they can also be applied when the data are transmitted from the merchant to consumer pension via the acquirer and/or the credit card organisation and/or the card issuer.

Referring now to FIG. 4 there is illustrated a further flow chart for implementing the method in accordance with the invention which in certain details is a slighty modified embodiment with respect to the embodiment as shown in the flow chart of FIG. 2. The flow chart as shown in FIG. 4 relates to an aspect of the method in accordance with the invention as may be performed, for example, in a start-up phase.

In the start-up phase as shown in FIG. 4 there is still no assurance of there being a strong demand for original rebate entitled cards, the important thing in this phase being to prompt as may holders of conventional, i.e. having no rebate entitlement, credit cars as possible by intensive marketing and sales promotion means to apply for rebate entitled credit cards so as to participate in the method in accordance with the invention. In this phase the issuing bank has no tasks to be satisfied in conjunction with the method in accordance with the invention and remains unaware directly of rebate transactions.

In the flow chart as shown in FIG. 4 conventional credit cards can be instituted as rebate entitled cards in the sense of the method in accordance with the invention. One of the arrows directed from the block "merchant" to the block "consumer pension processing system" is identified "merchant/card holder application file", meaning, for one thing, that a merchant himself makes an application with the consumer pension entity to be registered as a rebate granting merchant with the consumer pension entity. For another, this means, however, that a rebate granting merchant as prompted by a consumer as a result of a purchase with a conventional credit card - i.e. yet to become a rebate entitled credit card - makes an application for the corresponding credit card with the consumer pension entity.

Then, for this prompting purchase and for all subsequent purchases with this credit card rebate entitlement can be claimed.

Indicated in FIG. 4 is a pool account bank which in a banking sense both legally and technically honours the rebate transactions of all rebate entitled credit card holders and manages what is called a pool account which receives the rebate amounts of the payment transactions performed by all rebate entitled credit card holders. In a clearing and processing center as a component of the pool account bank the inward rebate transactions are directly banked in the individual accounts of the card holders. The pool account of the pool account bank thus has the function of an accumulation account of the card holders in the general ledger. Management of the individual accounts of the card holders and the pension accounts (card holders and/or third-party beneficiaries) is handled by funds management which may be a component of the pool account bank. Thus, the pool account bank can also handle asset management for the pension accounts, the investments of which do not flow into life insurances.

This means that in the clearing and processing center storage areas are formed corresponding to the individual accounts of the card holders and in which the rebate amounts of the card holders are stored and accumulated.

Some of the function blocks such as fund management module, card holder investments or card scheme clearing system as shown in FIG. 4 may be components of the pool account bank. Likewise to be understood functionally - as already mentioned in conjunction with the flow chart as shown in FIG. 2 - are the blocks indicated issuing bank, acquiring bank, net settlement bank and pool account bank. Some of, or all of these four different functions may also be handled in a banking sense both legally and technically by two or three banks or even also by just one single bank. In the same way, the consumer pension organisational entity may be a component of one of these banks or of the single bank.

In a phase subsequent to and/or in parallel with the start-up phase it may be provided for that original rebate entitled credit cards are issued by the issuing bank, application for which is then made when as desired by the consumer by the issuing bank with the consumer pension entity.

## Claims

1. A method for handling rebate entitled payment transactions by means of credit cards or the like, involving a) calculating a rebate amount on the basis of a payment transaction made by a credit card entitled for rebate with a merchant from the purchase sum of the payment transaction and a set rebate rate, and b) forwarding the rebate amount to an account assigned to the rebate entitled card holder and adding it to the value already having accumulated in the account.

2. The method as set forth in claim 1, **characterized in that** the rebate is granted by the merchant.

3. The method as set forth in claim 1, **characterized in that** the rebate account is represented by a storage area of a data processing system.

4. The method as set forth in claim 1, **characterized in that** rebate amounts from payment transactions of a plurality of card holders are remitted to a common pool account or accumulation account and banked from the common pool account to the rebate accounts assigned to the card holders.

5. The method as set forth in claim 1, **characterized in that** from said rebate account, preferably in regular time intervals, set amounts are transferred to a pension account assigned to the card holder as handled by an insurance or finance institute, particularly for the purpose of forming capital in the scope of a retirement pension or life insurance.

6. The method as set forth in claim 3, **characterized in that** the storage area is a component of first storage means, particularly of a data base, in which data as regards rebate entitled card holders is stored and in which each rebate entitled card holder is assigned a storage area in which rebate amounts are accumulated.

7. The method as set forth in claim 2, **characterized in that** in step a) of the method access is made to second storage means, particularly to a data base, in which data as regards rebate granting merchants and the rebate rates as applicable thereto is stored.

8. The method as set forth in claim 1, **characterized in that** in step a) the payment transaction is initiated by insertion of the credit card in a card reader belonging to the merchant.

9. The method as set forth in claim 1, **characterized in that** in step a) the payment transaction is initiated via Internet by the card holder entering the credit card number.

10. A system for handing rebate entitled payment transactions by means of credit cards or the like, comprising a credit card which has rebate entitlement, a rebate account assigned to the credit card holder, means for calculating a rebate amount from a purchase sum of payment transaction activated by the credit card holder and a set rebate rate, and means for communicating the rebate amount to the rebate account and adding the rebate amount to the amount already stored in the rebate account.

11. The system as set forth in claim 10, **characterized by** one or more rebate-granting merchants instituted so that they grant a rebate at a set rebate rate for a payment transaction with a rebate entitled credit card.

12. The system as set forth in claim 10, **characterized by** a pool account bank in which a pool account or accumulation account is installed, the pool account bank being instituted to honour rebate transactions and to honour the remitted rebate amounts in the pool account.

13. The system as set forth in claim 10, **characterized by** a number of storage areas representing the rebate accounts assigned to the corresponding rebate entitled card holders and instituted to store or accumulate the rebate amounts.

14. The system as set forth in claim 13, **characterized by** first storage means, particularly a data base, in which data as regards the rebate entitled consumers is stored and in which the storage areas are contained.

15. The system as set forth in claim 11, **characterized by** second storage means, particularly a data base, in which information is stored as regards the rebate-granting merchants and the rebate rates as applicable to the merchants.

16. The system as set forth in claims 14 and 15, **characterized in that** the calculating means and the first and second storage means and the calculating means are contained in a data base server (2).

17. The system as set forth in claim 10, **characterized by** telecommunications means (5) for receiving and relaying the relative data as to the payment transaction, particularly the purchase sum and the merchant concerned.

18. The system as set forth in claim 17, **characterized in that** the telecommunications means (5) are configured to relay the relative data to the data base server (2).
